# EUROPEAN PATENT APPLICATION

(11) **EP 4 535 519 A1**
(43) Date of publication of application: **09.04.2025**
(21) Application number: 23909658.9
(22) Date of filing: 03.11.2023
(51) Int. Cl.: H01M 50/103, H01M 50/15, H01M 50/176, H01M 50/188, H01M 50/325, H01M 50/536

(54) **SPACER FOR BATTERY CELL, BATTERY CELL, BATTERY PACK, AND VEHICLE**

(30) Priority: 29.12.2022 CN 202211716323; 29.12.2022 CN 202223610839 U
(71) Applicant: ZHEJIANG ZEEKR INTELLIGENT TECHNOLOGY CO., LTD., Ningbo, Zhejiang 315899 (CN); Viridi Energy Mobility Technology (Ningbo) Co., Ltd., Ningbo, Zhejiang 315336 (CN); Zhejiang Geely Holding Group Co., Ltd., Hangzhou, Zhejiang 310051 (CN)
(72) Inventor: YU, Dongpeng, Ningbo, Zhejiang 315899 (CN); WANG, Cong, Ningbo, Zhejiang 315899 (CN); LIU, Hang, Ningbo, Zhejiang 315899 (CN); BIAN, Ying, Ningbo, Zhejiang 315899 (CN); JIANG, Yabei, Ningbo, Zhejiang 315899 (CN); YAN, Long, Ningbo, Zhejiang 315899 (CN); NIU, Yaqi, Ningbo, Zhejiang 315899 (CN)
(74) Representative: Kraus & Lederer PartGmbB
(86) International application number: PCT/CN2023/129704
(87) International publication number: WO 2024/139725

(57) **Abstract**

Provided are a spacer (10) for a battery cell (1), a battery cell (1), a battery pack, and a vehicle. The spacer (10) includes a spacer body (100) having an accommodation groove (110). The accommodation groove (110) has a gap (120) formed at a bottom wall of the accommodation groove (110). The gap (120) is in communication with the accommodation groove (110). The gap (120) is adapted for a tab (31) of the battery cell (1) to pass through the gap to enable the tab (31) to be partially accommodated in the accommodation groove (110). The spacer body (100) has a width D, and the gap (120) has a width d, where 3*d ≤ 2*D.

## Description

### CROSS-REFERENCE TO RELATED APPLICATION

This application is based on and claims priority to Chinese Patent Application No. 202211716323.1 and Chinese Patent Application No. 202223610839.6, both filed on December 29, 2022, the entire contents of which are incorporated herein by reference.

### FIELD

The present disclosure relates to the field of vehicle technologies, and more particularly, to a spacer for a battery cell, a battery cell, a battery pack, and a vehicle.

### BACKGROUND

In the related art, a battery cell can include a cover plate, a lower plastic, and a battery core. The lower plastic is connected between the cover plate and the battery core.

To meet a welding requirement of a tab, a side edge of the lower plastic cannot be completely closed. In this way, the tab, after being bent, cannot be effectively isolated from a housing of the battery cell to allow a risk of a short circuit between the tab and the housing to be increased, causing insulation and safety of the battery cell to be poor.

### SUMMARY

The present disclosure aims at solving at least one of the technical problems existing in the related art. To this end, an object of the present disclosure is to provide a spacer for a battery cell, which can effectively improve insulation and safety of the battery cell.

Another object of the present disclosure is to provide a battery cell.

A further object of the present disclosure is to provide a battery pack.

A final object of the present disclosure is to provide a vehicle.

The spacer for the battery cell according to the present disclosure includes a spacer body having an accommodation groove. The accommodation groove has a gap formed at a bottom wall of the accommodation groove. The gap is in communication with the accommodation groove, and the gap is adapted for a tab of the battery cell to pass through the gap to enable the tab to be partially accommodated in the accommodation groove. The spacer body has a width D, and the gap has a width d, where 3*d ≤ 2*D.

With the spacer for the battery cell according to the embodiments of the present disclosure, the accommodation groove and the gap are formed at the spacer body, and the gap is in communication with the accommodation groove. In this way, the tab can be isolated and shaped by the spacer, to allow the partial structure of the tab to be constrained inside the spacer, thereby maintaining insulation and isolation between the tab and a housing of the battery cell. Therefore, insulation and safety of the battery cell can be greatly improved. By setting the width of the gap to be smaller than or equal to 2/3 times the width of the spacer body, an insulation effect of the spacer on the tab can be optimized to avoid poor insulation effect of the spacer due to excessive gap.

In some examples of the present disclosure, the spacer body further has a pressure relief groove. The pressure relief groove and the accommodation groove are arranged in a length direction of the spacer body. The pressure relief groove is adapted to discharge gas inside the battery cell.

In some examples of the present disclosure, the pressure relief groove has at least one pressure relief hole formed at a bottom wall of the pressure relief groove.

In some examples of the present disclosure, the at least one pressure relief hole includes a plurality of pressure relief holes. The plurality of pressure relief holes are arranged at intervals in the length direction of the spacer body; and/or the plurality of pressure relief holes are arranged at intervals in a width direction of the spacer body.

In some examples of the present disclosure, the spacer further includes a reinforcing rib. The reinforcing rib is disposed between the accommodation groove and the pressure relief groove; and/or the reinforcing rib is disposed between the plurality of pressure relief holes.

In some examples of the present disclosure, the pressure relief groove has a sidewall width D1 in the length direction of the spacer body and a sidewall width D2 in a width direction of the spacer body, wherein D2*0.8 ≤ D1 ≤ D2*1.2, where D1 ≥ 0.8 mm and D2 ≥ 0.8 mm.

In some examples of the present disclosure, the reinforcing rib has a width D3, where D2*0.5 ≤ D3 ≤ D2.

In some examples of the present disclosure, the spacer body further has a mounting groove formed at an end of the accommodation groove facing away from the pressure relief groove.

In some examples of the present disclosure, the spacer body has a length L, the pressure relief groove has a length L1, and the mounting groove has a width L2, wherein L ≤ (L1+L2)*3, where L1 ≥ 3 mm and L2 ≥ 3 mm.

The battery cell according to the present disclosure includes a cover plate assembly, a battery core, and a spacer disposed between the cover plate assembly and the battery core. The spacer is the spacer for the battery cell as described above.

The battery pack according to the present disclosure includes the spacer for the battery cell as described above, and/or the battery cell as described above.

The vehicle according to the present disclosure includes the spacer for the battery cell as described above, and/or the battery cell as described above, and/or the battery pack as described above.

Additional aspects and advantages of the present disclosure will be given at least in part in the following description, or become apparent at least in part from the following description, or can be learned from practicing of the present disclosure.

### BRIEF DESCRIPTION OF THE DRAWINGS

FIG. 1 is a schematic structural diagram of a battery cell according to an embodiment of the present disclosure.
FIG. 2 is a sectional view of a battery cell according to an embodiment of the present disclosure.
FIG. 3 is a partially enlarged schematic view at position A in FIG. 2.
FIG. 4 is a schematic structural diagram of a spacer according to an embodiment of the present disclosure.
FIG. 5 is a front view of a spacer according to an embodiment of the present disclosure.
FIG. 6 is a sectional view of a spacer according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

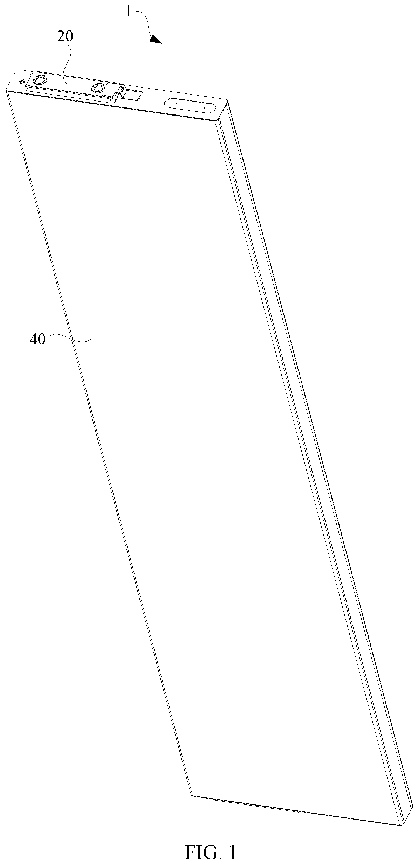

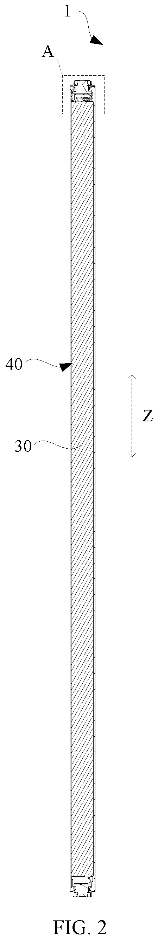

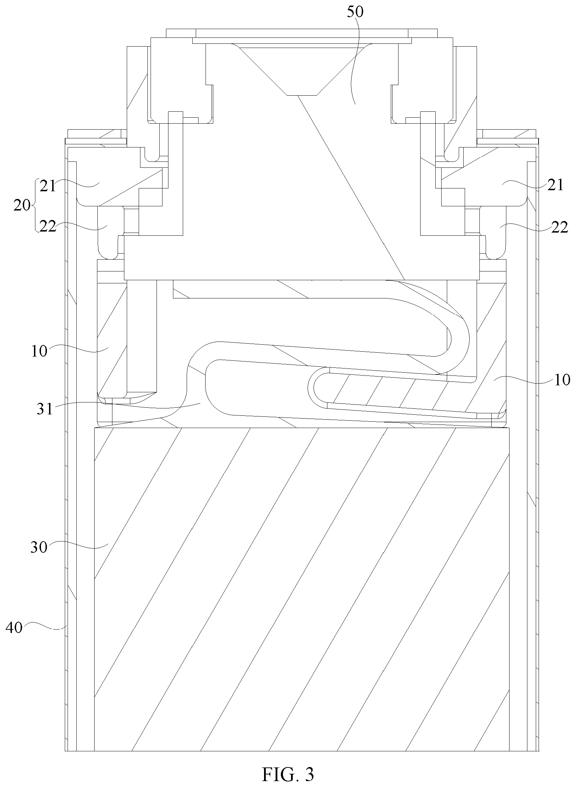

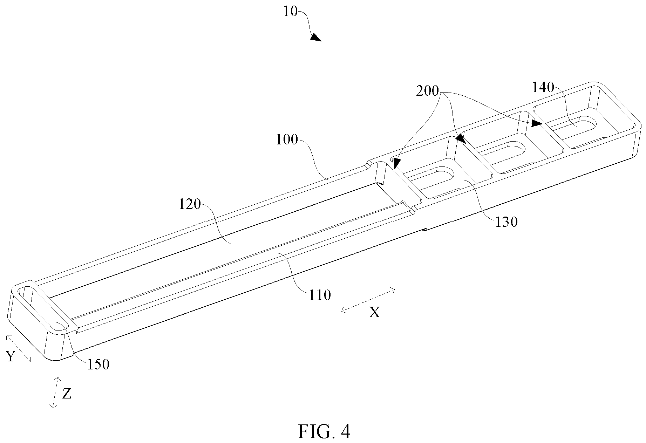

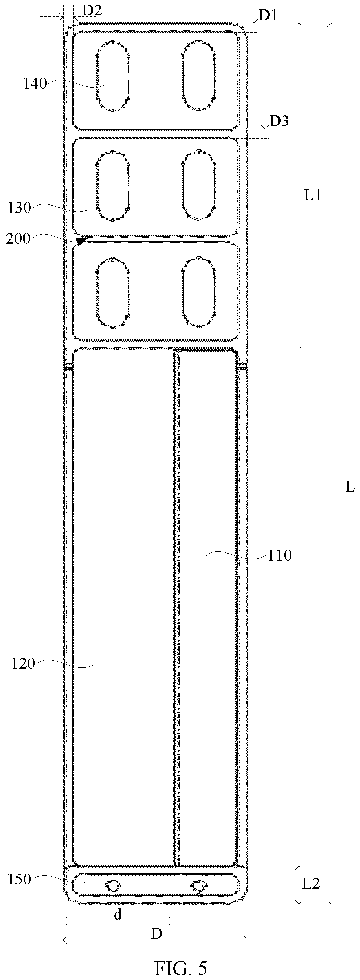

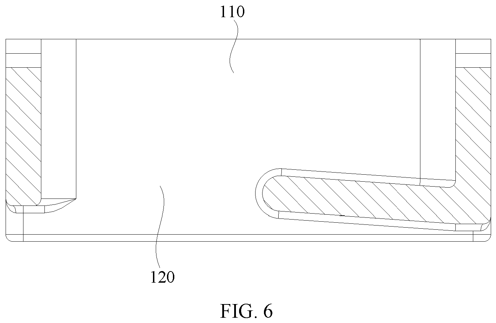

FIG. 1 is a schematic structural diagram of a battery cell 1 according to an embodiment of the present disclosure. FIG. 2 is a sectional view of a battery cell according to an embodiment of the present disclosure. FIG. 3 is a partially enlarged schematic view at position A in FIG. 2. FIG. 4 is a schematic structural diagram of a spacer according to an embodiment of the present disclosure. FIG. 5 is a front view of a spacer according to an embodiment of the present disclosure. FIG. 6 is a sectional view of a spacer according to an embodiment of the present disclosure. A spacer 10 for a battery cell 1 according to the embodiments of the present disclosure is described below with reference to FIG. 1 to FIG. 6. The spacer 10 includes a spacer body 100 having an accommodation groove 110. The accommodation groove 110 has a gap 120 formed at a bottom wall of the accommodation groove 110. The gap 120 is in communication with the accommodation groove 110, and the gap 120 is adapted for a tab 31 of the battery cell 1 to pass through the gap, to enable the tab 31 to be partially accommodated in the accommodation groove 110. The spacer body 100 has a width D, and the gap 120 has a width d, where 3*d ≤ 2*D.

In an exemplary embodiment of the present disclosure, the battery cell 1 can include a cover plate assembly 20, a battery core 30, a spacer 10, and a housing 40. The battery core 30 can be mounted in the housing 40. The spacer 10 can be disposed between the cover plate assembly 20 and the battery core 30. The cover plate assembly 20 can be fixedly connected to the housing 40 to enable the battery core 30 and the spacer 10 to be sealingly disposed inside the housing 40. In this way, the battery core 30 can be pressed and fixed by the spacer 10 to prevent displacement of the battery core 30 due to vibration of the battery cell 1.

Further, continuing to refer to FIG. 3, the battery core 30 can be provided with the tab 31 at an end of the battery core 30. An end of the tab 31 can be electrically connected to positive and negative electrode plates (not shown in the figures) inside the battery core 30 by welding, and the other end of the tab 31 can be electrically connected to a pole 50 of the battery cell 1 by welding. In this way, the battery core 30 can be electrically connected to the pole 50. Furthermore, the battery core 30 can be electrically connected to an external circuit through the pole 50, to allow the battery cell 1 to be charged and discharged. The cover plate assembly 20 can include a cover plate 21 and a lower plastic 22. A height direction of the battery cell can be a direction denoted by Z in FIG. 2. In the height direction of the battery cell 1, one side surface of the lower plastic 22 can be fixedly connected to a lower surface of the cover plate 21 by adhesive, etc., and the other side surface of the lower plastic 22 facing away from the cover plate 21 can abut with the spacer 10. That is, the lower plastic 22 can be abutted between the spacer 10 and the cover plate 21. In this way, the tab 31 can be separated from the cover plate 21 by the lower plastic 22 to allow an insulation between the tab 31 and the cover plate 21 to be maintained, which can effectively avoid short circuit failure of the battery cell 1 due to a contact between the tab 31 and the cover plate 21.

Continuing to refer to FIG. 4 to FIG. 6, the spacer body 100 can have a rectangular structure. A length direction of the spacer body 100 can be a direction denoted by X in FIG. 3. A width direction of the spacer body 100 can be a direction denoted by Y in FIG. 3. A height direction of the spacer body 100 can be a direction denoted by Z in FIG. 3. The accommodation groove 110 can be integrally formed at the spacer body 100. A length direction, a width direction, and a depth direction of the accommodation groove 110 are respectively parallel to the length direction, the width direction, and the height direction of the spacer body 100. The gap 120 can be integrally formed at the bottom wall of the accommodation groove 110. The gap 120 can penetrate the bottom wall of the accommodation groove 110 in the depth direction of the accommodation groove 110, and can extend in the length direction of the accommodation groove 110. As shown in FIG. 3, an end of the tab 31 facing away from the battery core 30 can pass through the gap 120 to be welded to the pole 50. In this case, the partial structure of the tab 31 between the pole 50 and the battery core 30 can be bent and accommodated in the accommodation groove 110. In this way, the tab 31 can be isolated and shaped by the spacer 10, allowing the partial structure of the tab 31 to be constrained inside the spacer 10. Therefore, the insulation and isolation between the tab 31 and the housing 40 can be maintained, and thus the insulation and safety of the battery cell 1 can be greatly improved.

As shown in FIG. 5, the width of the spacer body 100 can be labeled as D, and the width of the gap 120 can be labeled as d. A relationship between the width of the spacer body 100 and the width of the gap 120 can satisfy the following relational expression: 3*d ≤ 2*D. That is, the width of the gap 120 can be smaller than or equal to 2/3 times the width of the spacer body 100. Therefore, an insulation effect of the spacer 10 on the tab 31 can be optimized to avoid the poor insulation effect of the spacer 10 due to excessive gap 120.

With the spacer 10 for the battery cell 1 according to the embodiments of the present disclosure, the accommodation groove 110 and the gap 120 are formed at the spacer body 100, and the gap 120 is in communication with the accommodation groove 110. In this way, the tab 31 can be isolated and shaped by the spacer 10, to allow the partial structure of the tab 31 to be constrained inside the spacer 10, thereby maintaining insulation and isolation between the tab 31 and the housing 40 of the battery cell 1. Therefore, the insulation and safety of the battery cell 1 can be greatly improved. By setting the width of the gap 120 to be smaller than or equal to 2/3 times the width of the spacer body 100, the insulation effect of the spacer 10 on the tab 31 can be optimized to avoid the poor insulation effect of the spacer 10 deteriorating due to excessive gap 20.

Continuing to refer to FIG. 3 to FIG. 6, according to another embodiment of the present disclosure, the spacer body 100 further has a pressure relief groove 130. The pressure relief groove 130 and the accommodation groove 110 are arranged in the length direction of the spacer body 100. The pressure relief groove 130 is adapted to discharge gas inside the battery cell 1.

In an exemplary embodiment of the present disclosure, the pressure relief groove 130 and the accommodation groove 110 can be arranged adjacent to each other in the length direction of the spacer body 100. The pressure relief groove 130 can be integrally formed at the spacer body 100. A length direction, a width direction, and a depth direction of the pressure relief groove 130 are respectively parallel to the length direction, the width direction, and the height direction of the spacer body 100. In this way, when a failure occurs inside the battery core 30 and a large amount of gas is generated, the pressure relief groove 130 can discharge the gas inside the battery core 30 in time, which can effectively prevent the battery core 30 from expanding, and prevent the battery cell 1 from exploding, thereby effectively reducing safety hazards of the battery cell 1.

Continuing to refer to FIG. 3 to FIG. 5, according to another embodiment of the present disclosure, the pressure relief groove 130 has at least one pressure relief hole 140 formed at a bottom wall of the pressure relief groove 130.

In an exemplary embodiment of the present disclosure, the number of the pressure relief hole 140 can be one, two, or more, which is not specifically limited in the embodiments of the present disclosure. The pressure relief hole 140 can be circular, elliptical, rectangular, etc., which is not specifically limited by the present disclosure. The pressure relief hole 140 can penetrate the bottom wall of the pressure relief groove 130 in the depth direction of the pressure relief groove 130. In this way, when a failure occurs in the battery core 30 and a large amount of gas is generated, the pressure relief hole 140 can discharge the gas inside the battery core 30 in time, which can effectively prevent the battery core 30 from expanding, and prevent the battery cell 1 from exploding, thereby effectively reducing the safety hazards of the battery cell 1.

Continuing to refer to FIG. 4 and FIG. 5, according to another exemplary embodiment of the present disclosure, the at least one pressure relief hole 140 includes a plurality of pressure relief holes 140. The plurality of pressure relief holes 140 are arranged at intervals in the length direction of the spacer body 100; and/or the plurality of pressure relief holes 140 are arranged at intervals in the width direction of the spacer body 100.

In an exemplary embodiment of the present disclosure, the plurality of pressure relief holes 140 is provided, and the following embodiment takes six pressure relief holes 140 as an example for explanation. The six pressure relief holes 140 are arranged in two rows and three columns at the bottom wall of the pressure relief groove 130. That is, the six pressure relief holes 140 can be uniformly and alternately arranged in three columns in the length direction of the pressure relief groove 130, and the six pressure relief holes 140 can be uniformly and alternately arranged in two rows in the width direction of the pressure relief groove 130. In this way, an air discharge speed of the pressure relief hole 140 can be further increased, to allow the gas generated inside the battery core 30 to be rapidly discharged.

Continuing to refer to FIG. 4 and FIG. 5, according to a further embodiment of the present disclosure, the spacer 10 further includes a reinforcing rib 200. The reinforcing rib 200 is disposed between the accommodation groove 110 and the pressure relief groove 130; and/or the reinforcing rib 200 is disposed between the plurality of pressure relief holes 140.

In an exemplary embodiment of the present disclosure, the reinforcing rib 200 can be integrally and fixedly connected to the spacer body 100. The reinforcing rib 200 can extend in the width direction of the spacer body 100. That is, a length direction of the reinforcing rib 200 can be parallel to the width direction of the spacer body 100, and a width direction of the reinforcing rib 200 can be parallel to the length direction of the spacer body 100. The number of the reinforcing rib 200 can be one, two, or more, which is not specifically limited by the embodiments of the present disclosure. The following embodiments take three reinforcing ribs 200 as an example for explanation. One reinforcing rib 200 can be disposed between the accommodation groove 110 and the pressure relief groove 130, and the other two reinforcing ribs 200 can be disposed at intervals between two adjacent columns of pressure relief holes 140. Such arrangement can effectively improve the strength and hardness of the spacer body 100 through the reinforcing rib 200, preventing the spacer 10 from deforming after being pressed. In this way, the spacer 10 can be firmly abutted between the cover plate assembly 20 and the battery core 30, to allow the spacer 10 to effectively limit the battery core 30, preventing displacement of the battery core 30 due to vibration of the battery cell 1.

Continuing to refer to FIG. 5, in another exemplary embodiment of the present disclosure, the pressure relief groove 130 has a sidewall width D1 in the length direction of the spacer body and a sidewall width D2 in the width direction of the spacer body 100, wherein D2*0.8 ≤ D1 ≤ D2*1.2, where D1 ≥ 0.8 mm and D2 ≥ 0.8 mm.

In an exemplary embodiment of the present disclosure, as shown in FIG. 5, the sidewall width of the pressure relief groove 130 in the length direction of the spacer body 100 can be labeled as D1, and the sidewall width of the pressure relief groove 130 in the width direction of the spacer body 100 can be labeled as D2. D1 can be greater than or equal to 0.8 mm, and D2 can be greater than or equal to 0.8 mm. A relationship between D1 and D2 can satisfy the following relational expression: D2*0.8 ≤ D1 ≤ D2*1.2, that is, D1 can be between 0.8 times of D2 and 1.2 times of D2. In this way, the spacer body 100 has better strength and hardness, and the spacer 10 is prevented from deforming under pressure.

Continuing to refer to FIG. 5, in some examples of the present disclosure, the reinforcing rib 200 has a width D3, where D2*0.5 ≤ D3 ≤ D2.

In an exemplary embodiment of the present disclosure, the width of the reinforcing rib 200 can be labeled as D3, and D3 can be between 0.5 times of D2 and 1.0 times of D2. In this way, the spacer body 100 has better strength and hardness, and the spacer 10 is prevented from deforming under pressure.

Continuing to refer to FIG. 4 and FIG. 5, in some embodiments of the present disclosure, the spacer body 100 further has a mounting groove 150 formed at an end of the accommodation groove 110 facing away from the pressure relief groove 130.

In an exemplary embodiment of the present disclosure, the mounting groove 150, the accommodation groove 110, and the pressure relief groove 130 can be arranged in sequence in the length direction of the spacer body 100, that is, the mounting groove 150 and the pressure relief groove 130 can be respectively disposed at two opposite ends of the accommodation groove 110. A length direction of the mounting groove 150 can be parallel to the width direction of the spacer body 100, and a width direction of the mounting groove 150 can be parallel to the length direction of the spacer body 100. A plurality of mounting holes (not shown in the figures) can be formed in the mounting groove 150. Bolts (not shown in the figures) or screws (not shown in the figures) can be inserted into the mounting holes, allowing the spacer 10 to be threadedly connected to the cover plate 21 or the housing 40 of the battery cell 1.

Continuing to refer to FIG. 5, in some possible implementations of the present disclosure, the spacer body 100 has a length L, the pressure relief groove 130 has a length L1, and the mounting groove 150 has a width L2, wherein L ≤ (L1+L2)*3, where L1 ≥ 3 mm and L2 ≥ 3 mm.

In an exemplary embodiment of the present disclosure, the length of the spacer body 100 can be labeled as L, the length of the pressure relief groove 130 can be labeled as L1, and the width of the mounting groove 150 can be labeled as L2. L1 can be greater than or equal to 3 mm, and L2 can be greater than or equal to 3 mm. A sum of the length of the pressure relief groove 130 and the width of the mounting groove 150 can be greater than or equal to 1/3 times of the length of the spacer body 100. In this way, the anti-vibration performance of the spacer 10 can be effectively improved. In this case, the spacer 10 can be prevented from pressing and damaging the battery core 30, thus effectively limiting the battery core 30 and preventing displacement of the battery core 30 due to vibration of the battery cell 1.

Continuing to refer to FIG. 1 to FIG. 3, the battery cell 1 according to the embodiments of the present disclosure includes a cover plate assembly 20, a battery core 30, and a spacer 10 disposed between the cover plate assembly 20 and the battery core 30. The spacer 10 is the spacer 10 for the battery cell 1 in the above embodiments. A specific structure and working principle of the spacer 10 have been explained in detail in the above embodiments, which are not repeated here.

In an exemplary embodiment of the present disclosure, the battery cell 1 can include the cover plate assembly 20, the battery core 30, the spacer 10, and the housing 40. The battery core 30 can be mounted in the housing 40. The spacer 10 can be disposed between the cover plate assembly 20 and the battery core 30. The cover plate assembly 20 can be fixedly connected to the housing 40 to allow the battery core 30 and the spacer 10 to be sealingly disposed in the housing 40. In this way, the battery core 30 can be pressed and fixed by the spacer 10 to prevent displacement of the battery core 30 due to vibration of the battery cell 1. Further, the battery core 30 can be provided with a tab 31 at an end of the battery core 30. An end of the tab 31 can be electrically connected to the positive and negative electrode plates inside the battery core 30 by welding, and the other end of the tab 31 can be electrically connected to the pole 50 of the battery cell 1 by welding. In this way, the battery core 30 can be electrically connected to the pole 50, and further the battery core 30 is electrically connected to an external circuit through the pole 50, to allow the battery cell 1 to be charged and discharged.

The cover plate assembly 20 can include the cover plate 21 and the lower plastic 22. In the height direction of the battery cell 1, one side surface of the lower plastic 22 can be fixedly connected to the lower surface of the cover plate 21 by adhesive, etc., and the other side surface of the lower plastic 22 facing away from the cover plate 21 can abut with the spacer 10. That is, the lower plastic 22 can be abutted between the spacer 10 and the cover plate 21. In this way, the tab 31 can be separated from the cover plate 21 by the lower plastic 22 to allow the insulation between the tab 31 and the cover plate 21 to be maintained, which can effectively avoid the short circuit failure of a battery due to the contact between the tab 31 and the cover plate 21.

A battery pack (not shown in the figures) according to the embodiments of the present disclosure includes the spacer 10 for battery cell 1 in the embodiments described above, and/or the battery cell 1 in the embodiments described above. Specific structures and working principles of the spacer 10 and the battery cell 1 have been explained in detail in the above embodiments, which are not repeated here.

A vehicle (not shown in the figures) according to the embodiments of the present disclosure includes the spacer 10 for battery cell 1 in the embodiments described above, and/or the battery cell 1 in the embodiments described above, and/or the battery pack in the embodiments described above. Specific structures and working principles of the spacer 10, the battery cell 1, and the battery pack have been explained in detail in the above embodiments, which are not repeated here.

Other components of the spacer 10 for the battery cell 1 according to the embodiments of the present disclosure, such as a positive electrode plate, a negative electrode plate, the tab 31, the pole 50, the housing 40, and the like, as well as operations thereof, are known to those skilled in the art, which will not be described in detail herein.

In the description of the present disclosure, it should be understood that the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" should be construed to refer to the orientation or the position as shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the description of this specification, description with reference to the terms "an embodiment", "some embodiments", "examples" "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. Furthermore, different embodiments or examples and features of different embodiments or examples described in this specification may be combined and combined by one skilled in the art without contradiction.

Although embodiments of the present disclosure have been shown and described above, it should be understood that the above embodiments are merely exemplary, and cannot be construed as limitations of the present disclosure. For those skilled in the art, changes, alternatives, and modifications can be made to the above embodiments without departing from the scope of the present disclosure.

## Claims

1. A spacer for a battery cell, comprising:
a spacer body having an accommodation groove, the accommodation groove having a gap formed at a bottom wall of the accommodation groove, the gap being in communication with the accommodation groove, and the gap being adapted for a tab of the battery cell to pass through the gap to enable the tab to be partially accommodated in the accommodation groove,
wherein the spacer body has a width D, and the gap has a width d, where 3*d ≤ 2*D.

2. The spacer for the battery cell according to claim 1, wherein the spacer body further has a pressure relief groove, the pressure relief groove and the accommodation groove being arranged in a length direction of the spacer body, and the pressure relief groove being adapted to discharge gas inside the battery cell.

3. The spacer for the battery cell according to claim 2, wherein the pressure relief groove has at least one pressure relief hole formed at a bottom wall of the pressure relief groove.

4. The spacer for the battery cell according to claim 3, wherein the at least one pressure relief hole comprises a plurality of pressure relief holes, wherein:
the plurality of pressure relief holes are arranged at intervals in the length direction of the spacer body; and/or
the plurality of pressure relief holes are arranged at intervals in a width direction of the spacer body.

5. The spacer for the battery cell according to claim 4, further comprising a reinforcing rib, wherein:
the reinforcing rib is disposed between the accommodation groove and the pressure relief groove; and/or
the reinforcing rib is disposed between the plurality of pressure relief holes.

6. The spacer for the battery cell according to any one of claims 2 to 5, wherein the pressure relief groove has a sidewall width D1 in the length direction of the spacer body and a sidewall width D2 in a width direction of the spacer body, wherein D2*0.8 ≤ D1 ≤ D2*1.2, where D1 ≥ 0.8 mm and D2 ≥ 0.8 mm.

7. The spacer for the battery cell according to claim 5, wherein the reinforcing rib has a width D3, where D2*0.5 ≤ D3 ≤ D2.

8. The spacer for the battery cell according to any one of claims 2 to 7, wherein the spacer body further has a mounting groove, the mounting groove being formed at an end of the accommodation groove facing away from the pressure relief groove.

9. The spacer for the battery cell according to claim 8, wherein:
the spacer body has a length L;
the pressure relief groove has a length L1; and
the mounting groove has a width L2, wherein L ≤ (L1+L2)*3, where L1 ≥ 3 mm and L2 ≥ 3 mm.

10. A battery cell, comprising:
a cover plate assembly;
a battery core; and
the spacer for the battery cell according to any one of claims 1 to 9, the spacer being disposed between the cover plate assembly and the battery core.

11. A battery pack, comprising:
the spacer for the battery cell according to any one of claims 1 to 9; and/or
the battery cell according to claim 10.

12. A vehicle, comprising:
the spacer for the battery cell according to any one of claims 1 to 9; and/or
the battery cell according to claim 10; and/or
the battery pack according to claim 11.
